# EUROPÄISCHE PATENTSCHRIFT

(11) **EP 1 352 856 B1**
(45) Veröffentlichungstag und Bekanntmachung des Hinweises auf die Patenterteilung: **29.09.2004**
(21) Anmeldenummer: 03007184.9
(22) Anmeldetag: 29.03.2003
(51) Int. Cl.: B65G 47/08, B07C 5/38

(54) **Verfahren zur automatisierten Gruppierung von Objekten**
Method for the automated grouping of objects
Procédé de groupement automatisé d'objets

(30) Priorität: 12.04.2002 DE 10216174
(43) Veröffentlichungstag der Anmeldung: 15.10.2003
(73) Patentinhaber: imt robot AG, 70736 Fellbach (DE)
(72) Erfinder: Nagler, Peter, 70736 Fellbach (DE)
(74) Vertreter: Wasmuth, Rolf, Dipl.-Ing.

(56) Entgegenhaltungen:
- WO-A-99/28057

## Beschreibung

Die Erfindung betrifft ein Verfahren zur automatisierten Gruppierung von Objekten, welche auf einem Zuführband liegend zu einer Handhabungseinrichtung gefördert werden und in einen vorgegebenen Ordnungszustand in Sortimenten bestimmter Stückzahlen gruppiert werden, gemäß der im Oberbegriff des Patentanspruchs 1 angegebenen Gattung.

Aus der WO 99/28057 ist ein Verfahren bekannt, bei dem die Objekte in zufälliger Ordnung dem Zuführband aufgegeben werden, wobei eine Erkennungseinrichtung die Lage und die Position der ankommenden Objekte erfaßt und einer Steuereinheit meldet. Die Steuereinheit wertet den zufälligen Ordnungszustand auf dem Zuführband aus und bestimmt die Lage eines aus mehreren Objekten bestehenden Sortimentes auf dem Zuführband. Unter Berücksichtigung der Bandgeschwindigkeit des Zuführbandes wird die Handhabungseinrichtung von der Steuereinheit gesteuert und die Objekte von der Handhabungseinrichtung in eine vorgesehene Endposition auf dem Zuführband gebracht.

Der Förderfluß der Objekte auf dem Zuführband kann nicht immer aufrechterhalten werden und es kommt bei dem bekannten Verfahren immer wieder zu Unterbrechungen beim Nachschub. Werden die Objekte in Chargen mit großen Stückzahlen dem Zuführband aufgegeben, so kann die automatisierte Handhabungseinrichtung die Objekte mit hoher Legegeschwindigkeit auf dem Zuführband gruppieren, solange die Erkennungseinrichtung eine ausreichende Anzahl von Objekten meldet, die in den Greifbereich der Handhabungseinrichtung kommen. Bevor eine folgende Charge aufgeschüttet wird, kann es vorübergehend auf einer Förderstrecke des Zuführbandes zu weniger aufgelegten Objekten kommen. Die letzten Objekte einer Charge können dabei mitunter so ungünstig liegen, daß eine Zusammenstellung zu Sortimenten mit hohem Aufwand verbunden wäre. Auch können die verbleibenden Objekte einer Charge nicht mehr der vorgesehenen Anzahl für ein Sortiment entsprechen. Diese Objekte werden dann nicht mehr den Sortimenten zugeordnet, sondern werden als Ausschuß auf dem Zuführband abgeführt. Mit jeder Charge ist demnach bei dem bekannten Verfahren ein mehr oder weniger großer Ausschuß aufgrund der verbleibenden Objekte am Ende des Sortiervorganges verbunden.

Der vorliegenden Erfindung liegt die Aufgabe zugrunde, ein Verfahren zur automatisierten Gruppierung von Objekten der gattungsgemäßen Art zu schaffen, welches bei zuverlässiger Zusammenstellung von Sortimenten Ausschuß vermeidet und eine hohe Sortierleistung ermöglicht.

Diese Aufgabe wird erfindungsgemäß mit den Merkmalen des Patentanspruchs 1 gelöst.

Erfindungsgemäß ist vorgesehen, bei der Bestimmung der Ablageposition eines jeden Objektes auch die Anzahl der diesem Objekt auf dem Zuführband nachfolgenden Objekte zu berücksichtigen und bei Vorliegen einer zu geringen Anzahl an Objekten als für die Sortimentsstückzahl vorgegeben ist, die Handhabungseinrichtung in einem anderen Modus anzusteuern. Ein gegriffenes Objekt wird dann nicht wie im Gruppiermodus der Handhabungseinrichtung einem Sortiment zugeführt, sondern an einer in Förderrichtung des Zuführbandes zurückliegenden oder vorliegenden Ablageposition auf dem Zuführband abgelegt. Auf diese Weise werden im Staumodus die Objekte auf dem Zuführband gestaut oder vorgelegt und erst dann einem Sortiment zugruppiert. Das Aufstauen erfolgt nach vorgegebenen Kriterien, bis eine gewünschte Anzahl von Objekten auf dem Zuführband zusammengestellt werden kann. Die Erfindung beruht dabei auf dem Gedanken, daß bei laufendem Zuführband die Objekte innerhalb einer bestimmten Zeiteinheit gruppiert werden sollen, etwa ein bestimmtes Sortierbild gelegt werden soll oder die Objekte in Schalen oder dergleichen auf dem Band eingelegt werden müssen. Die überschüssige Sortierleistung beim Fehlen von Objekten kann für einen Vorgang "Staumodus" genutzt werden, wobei die Objekte vorgelegt oder so lange in zurückliegende Ablagepositionen auf dem Zuführband verbracht werden, bis genügend Objekte vorhanden sind, um innerhalb des zur Verfügung stehenden Zeitfensters abhängig von der Band-geschwindigkeit die vorgegebene Sortiervorschrift zu erfüllen. Hierbei können beispielsweise Hygienekriterien berücksichtigt werden. Mit dem erfindungsgemäßen Verfahren werden vollständige Sortimente zusammengestellt, wobei der Anfall von Ausschuß weitgehend abgestellt wird.

Insbesondere ist es möglich, bei einer aus mehreren Greifern bestehenden Handhabungseinrichtung ein Objekt nach vorne staffelartig vorzureichen oder nach hinten aufzustauen. So können auch Strecken überbrückt werden, die ein Mehrfaches des Greifbereichs eines Roboterarms betragen. Umfaßt die Handhabungseinrichtung mehrere Greifer, können diese aufeinander abgestimmt von der Steuereinheit angesteuert werden. Sofern mehrere Objektsorten sortiert werden oder eine Objektsorte als Träger, Behälter oder dergleichen für ein Sortiment ausgebildet ist, an das andere Objekte eingelegt werden sollen, so kann jedem gleichen Objekt vorteilhaft ein bestimmter Greifer zugeordnet werden. Es kann aber auch zweckmäßig sein, während des Staumodus eine Auswahl oder nur einem der zur Verfügung stehenden Greifer anzusteuern, mit dem alle Objekte auf dem Zuführband in eine vorliegende oder zurückliegende Ablageposition verschoben werden. Insbesondere können mehrere Greifer im Gruppiermodus und zeitgleich andere Greifer im Staumodus betrieben werden.

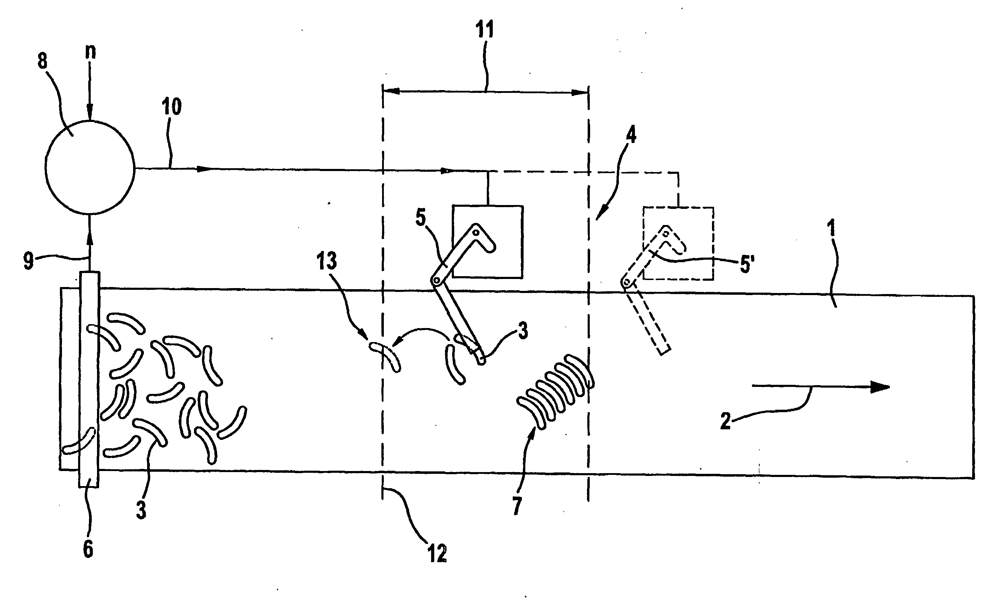

Ein Ausführungsbeispiel der Erfindung ist nachstehend anhand der Zeichnung näher erläutert.

Die einzige Zeichnungsfigur zeigt ein Zuführband 1, auf dem Objekte, im Ausführungsbeispiel Wurstwaren 3, mit einer Handhabungseinrichtung 4 zu Sortimenten 7 zusammengestellt werden. Die Würste 3 werden nach der Herstellung und einem an die Produktion anschließenden Trennvorgang der zusammenhängenden Würste in zufälliger Ordnung chargenweise dem Zuführband 1 aufgegeben und in Förderrichtung 2 des Zuführbandes 1 zu der Handhabungseinrichtung 4 gefördert. Die Handhabungseinrichtung 4 kann mehrere Greifer 5, 5' umfassen, von denen hier einer in durchgezogenen Linien dargestellt ist. Die Würste 3 werden von den Greifern 5 zu Sortimenten 7 von jeweils sechs nebeneinander liegenden Würsten zusammengestellt, wobei es sich von selbst versteht, daß die Anzahl der zu einem Sortiment 7 zusammenzuführenden Objekte variieren kann. Darüber hinaus können auch andere lose Waren sortiert werden oder auch verschiedene Objekte auf dem Zuführband sortiert werden, wobei die Handhabungseinrichtung Sortimente mit vorgegebenen Stückzahlen der verschiedenen Objektsorten zusammenstellt. Dabei kann eine Objektsorte der auf dem Zuführband ankommenden Objekte 3 auch als Träger, Behälter oder dergleichen für ein Sortiment 7 ausgebildet sein, dem andere Objekte zusortiert werden und von den Greifern 5, 5' in den Behälter eingelegt werden. Die Sortimente 7 werden auf dem Zuführband 1 weiterbefördert zu einer hier nicht dargestellten Einlegevorrichtung in eine Verpackung.

Die Handhabungseinrichtung 4 wird von einer Steuereinheit 8 gesteuert, welche das Steuersignal 10 für den als Roboter ausgebildeten Greifer 5 unter Berücksichtigung der Bandgeschwindigkeit n des Zuführbandes 1 aus dem Positionssignal 9 einer Erkennungseinrichtung 6 bestimmt. Die Erkennungseinrichtung 6 ist im gezeigten Ausführungsbeispiel als optische Erfassungseinrichtung ausgebildet, zum Beispiel eine die gesamte Breite des Zuführbandes erfassende CCD-Kamera oder dergleichen. Die Erkennungseinrichtung 6 erfaßt über die Breite des Zuführbandes die Lage und die Position der durchlaufenden Würste 3, wobei die Steuereinheit aus dem erfaßten zufälligen Ordnungszustand ein virtuelles Zustandsbild der Sortimente 7 auf dem Zuführband 1 berechnet und dabei jeder Wurst eine Ablageposition in einem der Sortimente 7 zuweist. Unter Berücksichtigung der Bandgeschwindigkeit n, die geringer als die Bewegungsgeschwindigkeit eines Greifers sein kann, wird der Steuereinheit ein entsprechendes Steuersignal 10 eingegeben, sobald die zu handhabende Wurst 3 in den erreichbaren Greifbereich 11 des Robotergreifers 5 gelangt.

Der Gruppiermodus der Handhabungseinrichtung 4, in dem die ankommenden Würste zu Sortimenten zusammengestellt werden, wird so lange beibehalten, wie genügend Würste in dem aufgrund der Bandgeschwindigkeit n zur Verfügung stehenden Zeitfenster für die Handhabungseinrichtung sortiert werden können. Die Steuereinheit berücksichtigt bei der Bestimmung der Ablagepositionen für die einzelnen Würste innerhalb der Sortimente die Anzahl der nachfolgenden Würste auf dem Zuführband und schaltet bei Vorliegen einer geringeren Anzahl von Würsten als für die Sortimentsstückzahl vorgegeben ist in einen Staumodus um. Vereinzelt zugeführte Würste, beispielsweise weit voneinander entfernt auf dem Zuführband liegende Würste oder die Restware einer aufgeschütteten Wurstcharge, die in ihrer Gesamtzahl nicht mehr für die Zusammenstellung in einem vollständigen Sortiment 7 ausreichen, können im Staumodus nicht zu Sortimenten zusammengestellt werden und werden daher an einer in Förderrichtung 2 zurückliegenden Ablageposition 13 auf dem Zuführband 1 abgelegt. Die Ablageposition 13 kann dabei an dem in Förderrichtung 2 am weitesten vorn liegenden Punkt 12 des erreichbaren Greifbereichs 11 bestimmt werden. Die Ablageposition 13 wird im Staumodus so bestimmt, daß die vereinzelt ankommenden Würste 3 gestaut werden, bis die Erkennungseinrichtung die Heranführung weiterer Würste 3 einer neuen Aufschüttung auf das Zuführband 1 meldet und die Steuereinheit 8 anschließend in den Gruppierzustand zum Sortieren in Sortimente 7 umschaltet. Während dem Gruppiermodus kann der Greifer 5 auch eine Wurst 3 an den Greifer 5' weiterreichen, so daß eine Wurst 3 auch in Förderrichtung 2 vorgelegt werden kann.

Die erfindungsgemäße Steuerung der Roboter in einem Staumodus zur Konzentrierung oder zum Vorlegen der zu sortierenden Objekte auf dem Zuführband 1 kann durch Eingabe entsprechender Konzentrationswerte der Objekte 3 beeinflußt werden, wobei die von der Erkennungseinrichtung 6 erfaßte Konzentration der durchlaufenden Neuaufschüttung der Ware auf das Zuführband als Kennwert zur Umschaltung zwischen dem Gruppier- bzw. Einlegemodus und dem Aufstaumodus herangezogen werden kann.

## Patentansprüche

1. Verfahren zur automatisierten Gruppierung von Objekten (3), welche auf einem Zuführband (1) liegend zu einer Handhabungseinrichtung (4) gefördert werden, welche die Objekte (3) in einen vorgegebenen Ordnungszustand in Sortimenten (7) bestimmter Stückzahlen der Objekte (3) sortiert, wobei eine Erkennungseinrichtung (6) die Lage und die Position der ankommenden Objekte (3) auf dem Zuführband (1) erfaßt und einer Steuereinheit (8) meldet, welche unter Berücksichtigung der Bandgeschwindigkeit (n) des Zuführbandes (1) jedem Objekt (3) eine Ablageposition (13) zuweist und die Handhabungseinrichtung (4) entsprechend ansteuert, sobald dieses Objekt (3) in den von der Handhabungseinrichtung (4) erreichbaren Greifbereich (11) gelangt,
**dadurch gekennzeichnet, daß** die Steuereinheit (8) bei der Bestimmung der Ablageposition (13) eines Objektes (3) die Anzahl der diesem Objekt (3) auf dem Zuführband (1) vorlaufenden und/oder nachfolgenden Objekte (3) berücksichtigt und bei Vorliegen einer geringeren Anzahl an Objekten (3) im greit bereich der Hand habungseinrichtung (4) als für die SortimentsstückzahI vorgegeben ist, die Handhabungseinrichtung (4) das betreffende Objekt (3) an einer in Förderrichtung (2) des Zuführbandes (1) vorlaufenden oder zurückliegenden Ablageposition (13) auf dem Zuführband (1) ablegt bis genügend objekte (3) für eine sortiment (7) vorhanden sind.

2. Verfahren nach Anspruch 1,
**dadurch gekennzeichnet, daß** die Handhabungseinrichtung (4) in einem Staumodus angesteuert ist und gegriffene Objekte (3) auf eine in Förderrichtung (2) zurückliegende Ablageposition (13) abgelegt werden.

3. Verfahren nach Anspruch 2,
**dadurch gekennzeichnet, daß** die Handhabungseinrichtung (4) so lange im Staumodus angesteuert wird, bis eine ausreichende Anzahl von Objekten (3) auf dem Zuführband (1) gestaut ist und anschließend in einen Gruppiermodus zurückgeschaltet wird.

4. Verfahren nach Anspruch 1 oder 2,
**dadurch gekennzeichnet, daß** die Handhabungseinrichtung (4) während dem Gruppiermodus einzelne Objekte (3) auf dem Zuführband vorlaufend oder zurücklegend ablegt.

5. Verfahren nach einem der Ansprüche 1 bis 4,
**dadurch gekennzeichnet, daß** die Objekte (3) auf dem Zuführband (1) sortiert werden.

6. Verfahren nach einem der Ansprüche 1 bis 5,
**dadurch gekennzeichnet, daß** unterschiedliche Objekte (3) zu Sortimenten (7) zusammengestellt werden.

7. Verfahren nach Anspruch 6,
**dadurch gekennzeichnet, daß** eine Objektsorte der auf dem Zuführband (1) ankommenden Objekte (3) als Träger, Behälter oder dergl. für ein Sortiment (7) ausgebildet ist, dem andere Objekte (3) zusortiert und von der Handhabungseinrichtung (4) eingelegt werden.

8. Verfahren nach einem der Ansprüche 1 bis 7,
**dadurch gekennzeichnet, daß** die Handhabungseinrichtung (4) mehrere Greifer (5) umfaßt, die aufeinander abgestimmt von der Steuereinheit (8) angesteuert werden.

9. Verfahren nach Anspruch 8,
**dadurch gekennzeichnet, daß** die Greifer (5) ein Objekt (3) staffelartig nach vorne oder nach hinten weiterreichen.

10. Verfahren nach Anspruch 8,
**dadurch gekennzeichnet, daß** jedem gleichen Objekt (3) ein bestimmter Greifer (5) zugeordnet ist.

11. Verfahren nach Anspruch 8,
**dadurch gekennzeichnet, daß** während des Staumodus nur eine Auswahl der zur Verfügung stehenden Greifer (5) angesteuert wird und verbleibende Greifer im Sortiermodus weiterarbeiten.

## Claims

1. Method of grouping objects (3) conveyed on a conveyor belt (1) to a handling system (4) on an automated basis, which sorts the objects (3) in a predetermined order into sorted groups (7) of a specific number of units, whereby a detection system (6) detects the position and disposition of the objects (3) arriving on the conveyor belt (1) and communicates these to a control unit (8), which allocates a sorted position (13) to every object (3) taking account of the belt speed (n) of the conveyor belt (1) and controls the handling system (4) accordingly as soon as this object (3) arrives within the handling range (11) of the handling system (4),
**characterised in that**, in determining the sorted position (13) of an object (3), the control unit (8) takes account of the number of objects (3) ahead of and/or behind this object (3) on the conveyor belt (1) and if the number of objects (3) within the handling range of the handling system (4) is less than the preset number of units for the sorted group, the handling system (4) places the relevant object (3) in a forward or rear sorted position (13) on the conveyor belt (1) relative to the conveying direction (2) of the conveyor belt (1) until enough objects (3) are available to make up a sorted group (7).

2. Method as claimed in claim 1,
**characterised in that** the handling system (4) is switched to accumulation mode and handled objects (3) are placed in a rear sorted position (13) relative to the conveying direction (2).

3. Method as claimed in claim 2,
**characterised in that** the handling system (4) is held in accumulation mode until a sufficient number of objects (3) has been accumulated on the conveyor belt (1) and is then switched back to grouping mode.

4. Method as claimed in claim 1 or 2,
**characterised in that** the handling system (4) places individual objects (3) in a forward position or rear position on the conveyor belt during grouping mode.

5. Method as claimed in one of claims 1 to 4,
**characterised in that** the objects (3) are sorted on the conveyor belt (1).

6. Method as claimed in one of claims 1 to 5,
**characterised in that** different objects (3) are placed together in sorted groups (7).

7. Method as claimed in claim 6,
**characterised in that** one object type of the objects (3) arriving on the conveyor belt (1) is a tray or container or similar for a sorted group (7) and other sorted objects (3) are allocated to and placed in it by the handling system (4).

8. Method as claimed in one of claims 1 to 7,
**characterised in that** the handling system (4) has a plurality of grippers (5) which are controlled in synchronisation with one another by the control unit (8).

9. Method as claimed in claim 8, **characterised in that** the grippers (5) move an object (3) forwards or backwards on a relay-type basis.

10. Method as claimed in claim 8,
**characterised in that** every same object (3) is allocated a specific gripper (5).

11. Method as claimed in claim 8,
**characterised in that** only selected ones of the available grippers (5) are switched to accumulation mode and the remaining grippers continue to operate in sorting mode.

## Revendications

1. Procédé pour le groupement automatisé d'objets (3), qui sont transportés sur une bande d'alimentation (1) couchés vers un système de manipulation (4), qui trie les objets (3) dans un état d'ordre prédéfini en assortiments (7) de nombres définis d'objets (3), un système de reconnaissance (6) enregistrant l'emplacement et la position des objets (3) arrivant sur la bande d'alimentation (1) et le signalant à une unité de commande (8), qui attribue à chaque objet (3) une position de dépôt (13) en tenant compte de la (des) vitesse(s) de la bande d'alimentation (1) et active le système de manipulation (4) en conséquence dès que cet objet (3) arrive dans la zone de préhension (11) pouvant être atteinte par le système de manipulation (4), **caractérisé en que** l'unité de commande (8) tient compte lors de la détermination de la position de dépôt (13) d'un objet (3) du nombre des objets (3) précédant et/ou suivant cet objet (3) sur la bande d'alimentation (1), et en cas de présence d'un nombre plus faible d'objets (3) dans la zone de préhention du système de manipulation (4) que pour le nombre d'assortiments prédéfini, le système de manipulation (4) dépose l'objet (3) concerné sur une position de dépôt (13) avançant ou reculant dans le sens de transport (2) de la bande d'alimentation (1) sur la bande d'alimentation (1) jusqu'à ce qu'on ait suffisamment d'objets (3) pour un assortiment (7).

2. Procédé selon la revendication 1, **caractérisé en ce que** le système de manipulation (4) est activé dans un mode de retenue et des objets (3) saisis sont déposés sur une position de dépôt (13) reculant dans le sens de transport (2).

3. Procédé selon la revendication 2, **caractérisé en ce que** le système de manipulation (4) est activé en mode de retenue jusqu'à ce qu'un nombre suffisamment d'objets (3) soit retenu sur la bande d'alimentation (1) et soit commuté ensuite en arrière dans un mode de groupement.

4. Procédé selon la revendication 1 ou 2, **caractérisé en ce que** le système de manipulation (4) dépose pendant le mode de groupement des objets (3) individuels en avançant et en reculant sur la bande d'alimentation.

5. Procédé selon l'une quelconque des revendications 1 à 4, **caractérisé en ce que** les objets (3) sont triés sur la bande d'alimentation (1).

6. Procédé selon l'une quelconque des revendications 1 à 5, **caractérisé en ce que** différents objets (3) sont regroupés en assortiments (7).

7. Procédé selon la revendication 6, **caractérisé en ce qu'**une sorte d'objet des objets (3) arrivant sur la bande d'alimentation est réalisée comme support, récipient ou similaire pour un assortiment (7), auquel d'autres objets (3) sont amenés par triage et sont insérés par le système de manipulation (4).

8. Procédé selon l'une quelconque des revendications 1 à 7, **caractérisé en ce que** le système de manipulation (4) comprend plusieurs grappins (5) qui sont activés par l'unité de commande (8) en s'adaptant les uns aux autres.

9. Procédé selon la revendication 8, **caractérisé en ce que** les grappins (5) transmettent un objet (3) de façon échelonnée vers l'avant ou vers l'arrière.

10. Procédé selon la revendication 8, **caractérisé en ce qu'**un grappin (5) défini est attribué à chaque objet (3) identique.

11. Procédé selon la revendication 8, **caractérisé en ce que** seulement un choix des grappins (5) mis à disposition est activé pendant le mode de retenue et des grappins restants continuent de travailler en mode de tri.
